# EUROPEAN PATENT APPLICATION

(11) **EP 4 480 720 A1**
(43) Date of publication of application: **25.12.2024**
(21) Application number: 24165966.3
(22) Date of filing: 25.03.2024
(51) Int. Cl.: B60C 25/05, B60C 25/138

(54) **DEVICE FOR REMOVING AND MOUNTING TIRES FROM/ONTO RIMS**

(30) Priority: 19.06.2023 IT 202300002604 U
(71) Applicant: Femas S.r.l., 42015 Correggio (RE) (IT)
(72) Inventor: Ferrari, Gino, 42015 Correggio (RE) (IT); Maioli, Franco, 42015 Correggio (RE) (IT)
(74) Representative: Feltrinelli, Secondo Andrea

(57) **Abstract**

The device (1) for removing and mounting tires from/onto rims (C) comprises: a hook (16) able to be introduced between a bead of a tire and an edge (10) of a rim (C) on which the tire is mounted; means for moving the hook (16) alternatively between a position external to the bead and the edge (10) of the rim (C) and an inserted position, according to a trajectory (T) of movement over the edge (10) without contact, and comprising: first connecting rod means (11) for dragging the hook (16); second connecting rod means (19) for guiding the hook (16); driving means rotatably integral with the first connecting rod means (11) by means of a transverse pin (8).

## Description

### Field of the invention

The invention concerns a device for removing and mounting tires from/onto rims, which is generally able to be mounted onto and used with tire removing machines.

### Background of the invention

Devices mounted on tire removing machines and used to remove and mount vehicle wheel tires from or onto rims are known. Typically, these devices comprise a hook that is mounted mobile at the lower end of a vertical rod, also called a pole, which is in turn supported vertically sliding at one end of an operating arm which all tire removing machines are equipped with.

The operating arm is substantially horizontal and has an end hinged to a column that rises from the bed of the tire removing machine.

The hook faces toward the outside of the tire removing machine and is mounted between two vertical support flanges which are parallel to each other and which form, in the upper zone, an attachment to the base of the rod, while, in the median-lower zone, they provide the support for the ends of the articulation elements that sustain the hook and allow it to move according to a sinusoidal trajectory, in such a way that it can be inserted between the bead of the tire and the edge of the rim, moving over it without coming into contact with it, to avoid possible damage to it.

The movement of the articulation elements and, therefore, of the hook, is achieved by means of a fluid dynamic actuator which is mounted on the stem, above the flanges, parallel to the longitudinal axis of the latter and which is connected to an attachment point of one of the articulation elements by means of an intermediate connecting rod.

When the hook has to be inserted between the bead of the tire and the edge of the rim, the rim is first clamped on the rotating work platform that tire removing machines are typically equipped with, and then the base of the hook is rested on the bead of the tire; subsequently, the fluid dynamic actuator is driven in the direction of the tire, so that it pushes the connecting rod which, in turn, makes the articulation elements move in rotation.

The latter make the hook follow a sinusoidal roto-translation trajectory that allows it to progressively bend the bead of the tire, create a passage gap between it and the edge of the rim, and be introduced in the desired position by moving over it without contact.

When the hook is fully introduced between the edge of the rim clamped on the platform and the heel of the tire, it elastically resumes its original shape, and the internal edge of the tire automatically rests on the bend of the hook.

The fluid dynamic actuator is then driven again, however in the opposite direction to the previous one, and the bend of the hook automatically hooks the internal edge of the tire, lifting it beyond the edge of the rim.

The removal is then completed by making the rim and the tire rotate in a known manner with the platform with respect to the hook, which acts in traction on the bead and completes its circumferential extraction from the rim, keeping it raised during the rotation.

To instead allow a tire to be mounted onto a rim, these known devices are also equipped with a prong that faces the platform and the rim, and which extends from the flanges that support the hook.

Briefly, the prong is rested on a point of a bead of a tire loosely fitted on the rim, but extracted therefrom, and it presses on this point making it move over the rim's edge and taking it inside the rim's channel.

By then making both the rim and also the tire rotate in a known manner, that is, with the platform, with respect to the prong, this progressively forces the bead to move over the edge of the rim until all of it has entered the latter's channel.

This type of device, while yielding satisfactory performance, has a typical disadvantage which consists in the complexity of moving the hook, a complexity that requires the presence of at least one fluid dynamic actuator and a mechanical articulation in order to transfer the action of the actuator to the articulation elements that sustain the hook.

Another disadvantage, directly derived from the use of actuators and mechanical joints, consists in the fact that the movement of the hook over time can become inaccurate, due to the wear clearances that can be generated between the components' joints.

This inaccuracy can result in the risk of hard contact between the hook and the edges of the rims, which can cause damage to them, which must be avoided at all costs.

### Purposes of the invention

One purpose of the invention is to overcome the disadvantages disclosed above, providing a device for removing and mounting tires from/onto rims which allows an optimal operation thereof, while simultaneously having a simplified structure compared to known devices.

Another purpose of the invention is to provide a device for removing and mounting tires from/onto rims that operates with precision, preventing the risk of damaging said rims. According to one aspect of the invention, there is provided a device for removing and mounting tires from/onto rims, in accordance with the characteristics of claim 1.

The invention allows to achieve the following advantages:
- significantly simplify the mechanical structure of the device for removing and mounting tires from/onto rims, making its operation more precise and its purchase economical;
- avoid risks of damaging the rims when driving the device for removing and mounting tires from/onto rims.

### Brief description of the drawings

Other characteristics and advantages of the invention will become more apparent from the detailed description of some preferred but not exclusive embodiments of a device for removing and mounting tires from/onto rims, shown as a nonlimiting example in the attached drawings wherein:
FIG. 1 is a schematic lateral view of the device for removing and mounting tires from/onto rims according to the invention;
FIG. 2 is a partial and perspective view of a part of the device of fig. 1;
FIG. 3 is a rear and perspective view of the device of fig. 1;
FIG. 4 is a schematic lateral view of the device for removing and mounting tires from/onto rims according to the invention in a possible variant.

### Detailed description of a preferred example embodiment

With reference to the cited drawings, 1 indicates, as a whole, a device for removing and mounting tires from/onto rims C of a wheel of a vehicle, hereafter device 1 for short.

The device 1 can be mounted on the lower end of a rod 2 which is part of an operating arm (not shown) normally fitted to a tire removing machine, which is also not shown since it is known to the person of skill in the art.

The device 1 comprises connection means 4, 5, 6 able to receive an end, in particular a lower end, of the rod 2.

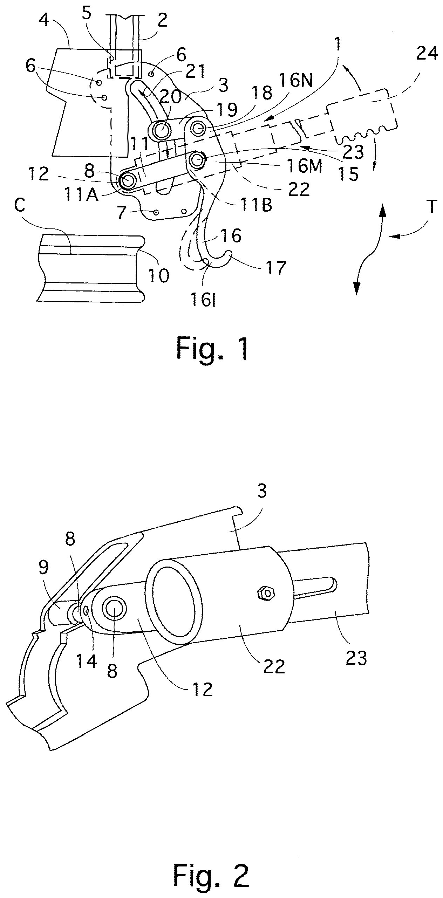

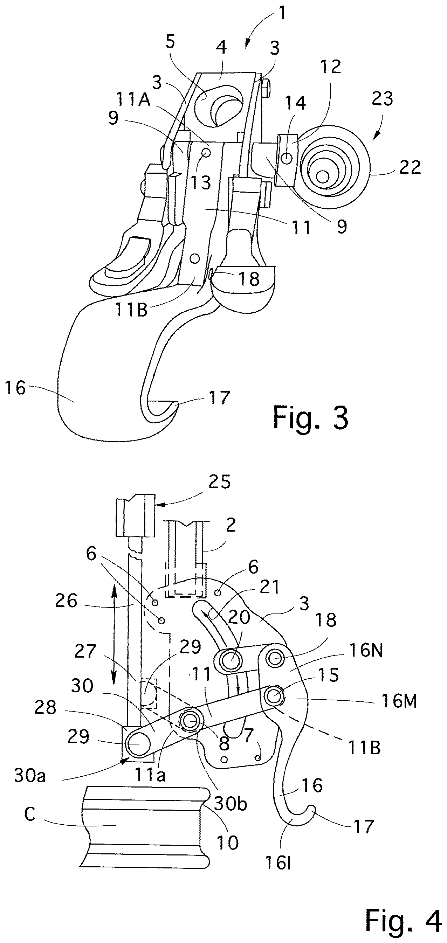

In the example given here, the connection means comprise an attachment element 4 in which a seating 5 is created that is intended to accommodate the lower end of the rod 2 and retain it inside it, clamping it for example by means of screws and/or bolts 6 (figs. 1 and 3).

The device 1 comprises a pair of flanges 3, parallel to each other, between which the attachment element 4 is interposed and tightened.

The two flanges 3 are also tightened together, for example by means of screws and/or bolts 7 that keep them in contact on the sides of the attachment element 4.

The device 1 comprises a hook 16 able to be introduced between a bead of a tire and an edge 10 of the rim C on which the tire is mounted. The hook 16 comprises an operating bend 17 disposed in correspondence with a free lower end 16i which faces the rim C.

The device 1 comprises means for moving the hook 16 alternately between a position outside the bead and the edge 10 of the rim C, and an inserted position of the operating bend 17, according to a mixtilinear trajectory T of movement over the edge 10 without contact, as will be explained in more detail below.

The movement means comprise first connecting rod means 11 for dragging the hook 16, second connecting rod means 19 for guiding the movement of the hook itself, and driving means.

The driving means comprise at least one command element having a drive chosen between manual and automatic.

In a first embodiment, the at least one command element is manually driven. In particular, the driving means comprises at least one command lever 23 equipped with an end 24 that is able to be gripped by the operator in order to rotate the lever 23 and having a body with an adjustable length. As can be seen in the embodiment of figs. 1 and 3, the lever 23 is preferably of the telescopic type, so as to adjust its length both as a function of the efforts to be applied by the operators and also of the overall dimensions of the device 1.

In the embodiment provided here by way of example, the first connecting rod means 11 are conformed as a first connecting rod 11 and the second connecting rod means 19 as a second connecting rod 19.

The first connecting rod 11 comprises a head 11A and an opposite end 11B.

The device 1 comprises a transverse dragging pin, schematically indicated with 8 and referred to as pin 8 for short.

The manual driving means are rotatably integral with the first connecting rod 11 by means of the pin 8.

In the preferred embodiment of the invention, the pin 8 is coaxially accommodated inside a cylindrical seating 9 in which it can rotate. In the example shown, the pin 8 is disposed transversely with respect to the flanges 3.

The head 11A of the connecting rod 11 is also keyed onto the pin 8.

In the embodiment shown, a bracket 12 is also keyed onto the pin 8, in particular in correspondence with one end of the pin 8 protruding from one of the flanges 3, as seen in fig. 3.

On the bracket 12 there is attached, for example with a weld, a bushing 22 in which there is accommodated the end of the lever 23 which is on the opposite side with respect to the end where the grippable end 24 is provided.

Both the head 11A and also the bracket 12 are made rotationally integral with the pin 8, for example by means of transverse clamping keys, indicated respectively with 13 and 14.

The end 11B of the connecting rod 11 is hinged to a median zone 16M of the hook 16 by means of a hinge pin 15.

The hook 16 also comprises an opposite zone 16N, in correspondence with which a first end of the second connecting rod 19 is hinged, by means of a hinge pin 18.

A second end of the second connecting rod 19 opposite to the first is connected to a transverse pin 20, the ends of which can slide guided bilaterally in corresponding slots 21 that face each other in a specular manner and are created in the transverse thicknesses of the two flanges 3, preferably without going out of the overall transverse dimension of the flanges themselves.

The means for moving the hook 16, that is, the assembly formed by the first connecting rod 11 and by the second connecting rod 19, allow the hook 16 to perform a movement according to a mixtilinear trajectory from, or toward, the rim C, schematically indicated with T in fig. 1, which allows the operating bend 17 to move over its external edge, touching it slightly without impacting it. The drive of the movement means is of the manual type and is achieved when an operator acts on the lever 23, making the pin 8 rotate. The movement of the hook 16 and of its operating bend 17 imposed by the lever 23 through the pin 8 allows the bend, in a step of removing a tire from the rim C, to penetrate between the external edge of the latter, indicated with 10 in fig. 1, and the concurrent bead of the tire, hooking it from the inside.

The subsequent opposite action of the operator on the lever 23 that lifts the hook 16 from the rim C, first hooks the bead, as previously mentioned, and then lifts it beyond the external edge 10.

The rim C and, therefore, the entire wheel of the vehicle are normally clamped on the rotating motorized platform that a tire removing machine is normally equipped with. By therefore making the platform rotate when the operating bend 17 has hooked and lifted the bead of the tire beyond the external edge 10 of the rim C, it is possible to progressively make the bead completely come out beyond the external edge 10, making the tire slack, which can therefore easily be removed from the rim C.

By reversing the maneuver described above, it is possible to mount a tire onto the rim C.

In detail, the operator first fits a first bead, considered the lower one of the deflated and loose tire, beyond the external edge 10, toward the center of the rim C, then, acting on the lever 23, the operator takes the lower surface of the operating bend 17 to press on the upper bead of the tire, opposite the lower one, pushing it until it locally moves over the external edge 10 in the direction of the central channel of the rim C.

By then making the platform of the tire removing machine rotate, and keeping the pressure of the operating bend 17 on the bead of the tire during the rotation, the bead progressively moves over the external edge 10 completely, completing the mounting of the tire which is then inflated to make the wheel ready for the subsequent balancing and mounting on the vehicle.

The device 1, despite being manually driven, is as effective in operation as known devices driven with specific actuators, while being significantly simpler in structure and, therefore, cheaper to produce and purchase.

In addition, the possibility of adjusting the length of the lever 23 allows operators to calibrate the value of the forces to be applied to the tires as needed during the work steps for removing them from and mounting them onto the rims.

In a variant of the device according to the invention, shown in fig. 4, the device 1 operates automatically.

In fig. 4, the elements common to the two embodiments already described with reference to figs. 1, 2 and 3 have been indicated with the same numbers.

In the variant of fig. 4, the at least one command element of the driving means is automatically driven.

In the example given here, the at least one command element is a fluid dynamic actuator, in this specific case of the pneumatic type.

The actuator 25 is mounted and attached, in a manner known to the person of skill, integrally on the tire removing machine, in proximity to the rod 2.

The actuator 25 comprises another rod 26 and connection means 28, 29, 30 provided in correspondence with an end 27 of the other rod 26 distal with respect to the tire removing machine.

In the example given here, the connection means comprise an attachment element 28, a transverse hinge pin 29 and third connecting rod means 30.

In the embodiment provided here by way of example, the third connecting rod means 30 are conformed as a third connecting rod 30.

The attachment element 28 supports the transverse pin 29, to which a concurrent end 30A of the third connecting rod 30 is articulated.

An opposite end 30B of the third connecting rod 30 is in turn articulated to the head 11A of the first connecting rod 11 by means of the pin 8.

In this second version, the movement trajectory T of the hook 16 remains unchanged, while the movement of the latter no longer occurs manually by means of the lever 23, but through the action of the actuator 25.

The actuator 25, by pushing or retracting the other rod 26 on command, drives the third connecting rod 30 into rotation which, in turn, acts on the first connecting rod 11 in place of the lever 23, making it move as described above for the manual version of the invention.

In practice, it has been verified that the invention achieves the intended purposes.

The invention as conceived is susceptible to modifications and variants, all of which are within the scope of the inventive concept.

Furthermore, all the details can be replaced with other technically equivalent elements.

In their practical embodiment, any other materials, as well as shapes and sizes, can be used according to requirements, without thereby departing from the scope of protection of the following claims.

## Claims

1. A device (1) for removing and mounting tires from/onto rims (C) comprising:
- connection means (4, 5, 6) configured to receive a support rod (2) supplied with a tire removing machine;
- a hook (16) able to be introduced between a bead of a tire and an edge (10) of a rim (C) on which the tire is mounted;
- means for moving said hook (16) alternatively between a position external to said bead and edge (10) of the rim (C) and an inserted position, according to a trajectory (T) of movement over said edge (10) without contact, said movement means comprising:
- first connecting rod means (11) for dragging said hook (16) ;
- second connecting rod means (19) for guiding said hook (16) ;
- driving means rotatably integral with said first connecting rod means (11) by means of a transverse pin (8), **characterized in that** said driving means comprise at least one command element (23, 25) driven either manually or automatically.

2. The device as in claim 1, wherein said hook (16) has a body which defines a lower end (16I) shaped as a bend (17) .

3. The device as in claim 2, wherein said hook (16) comprises a zone (16N), opposite to said lower end (16I) , to which a first end of said second connecting rod means (19) is hinged by means of a respective hinge pin (18).

4. The device as in any claim hereinbefore, wherein said hook (16) comprises a median fulcrum zone (16M) to which a second end (11B) of said first connecting rod means (11) is hinged by means of a hinge pin (15).

5. The device as in claim 3, wherein said second connecting rod means (19) comprise a second end, opposite to said first end, which is connected to a transverse pin (20), the ends of which can slide guided bilaterally in corresponding slots (21) which face each other in a specular manner and are created in the transverse thicknesses of respective flanges (3).

6. The device as in any claim hereinbefore, wherein said first connecting rod means (11) comprise a head (11A) keyed onto said transverse pin (8).

7. The device as in any claim hereinbefore, wherein said command element is manually driven and comprises a lever (23) equipped with an end (24) able to be gripped and having a body with an adjustable length.

8. The device as in claim 7, wherein said body of adjustable length comprises a telescopic body.

9. The device as in claim 7 or 8, comprising a bracket (12) keyed onto said transverse pin (8) and a bushing (22) attached to said bracket (12) and configured to accommodate the end of said lever (23) on the opposite side with respect to said grippable end (24).

10. The device as in any claim from 1 to 6, wherein said command element is automatically driven and comprises an actuator (25) mounted integral with said tire removing machine and having another rod (26) which is articulated, in correspondence with a distal end thereof, to a concurrent end (30A) of third connecting rod means (30), which have an opposite end (30B) in turn articulated to said first connecting rod means (11) by means of said transverse pin (8) .

11. A tire changing machine, **characterized in that** it comprises a device (1) for removing and mounting tires from/onto rims (C) as in any claim hereinbefore.
